# EUROPÄISCHE PATENTSCHRIFT

(11) **EP 4 338 580 B1**
(45) Veröffentlichungstag und Bekanntmachung des Hinweises auf die Patenterteilung: **24.12.2025**
(21) Anmeldenummer: 23186580.9
(22) Anmeldetag: 20.07.2023
(51) Int. Cl.: A01F 12/395, A01F 12/20, A01F 7/04, A01F 12/39

(54) **SELBSTFAHRENDER MÄHDRESCHER**
SELF-PROPELLED COMBINE HARVESTER
MOISSONNEUSE-BATTEUSE AUTOMOTRICE

(30) Priorität: 13.09.2022 DE 102022123311
(43) Veröffentlichungstag der Anmeldung: 20.03.2024
(73) Patentinhaber: CLAAS Selbstfahrende Erntemaschinen GmbH, 33428 Harsewinkel (DE)
(72) Erfinder: BUßMANN, Jens, 49179 Ostercappeln (DE)
(74) Vertreter: CLAAS Gruppe

(56) Entgegenhaltungen:
- EP-A1- 1 147 701
- EP-A1- 4 230 025
- DE-A1- 3 537 959
- DE-A1- 3 601 359
- US-A- 6 129 629

## Beschreibung

Die vorliegende Anmeldung betrifft einen selbstfahrenden Mähdrescher gemäß dem Oberbegriff von Anspruch 1.

Der Mähdrescher ist dazu vorgesehen und eingerichtet, auf einem Feld aufstehende Pflanzen zu ernten, wobei die Pflanzen unter anderem mittels einer Drescheinrichtung verarbeitet werden. Diese ist als tangentiale Drescheinrichtung ausgebildet und umfasst eine tangentiale Vortrommel sowie eine in Strömungsrichtung eines Erntegutstroms der Vortrommel nachgeschaltete tangentiale Dreschtrommel. Ferner umfasst die Drescheinrichtung einen Dreschkorb, der sowohl die Vortrommel als auch die Dreschtrommel zumindest bereichsweise ummantelnd einfasst. Im Zuge der Verarbeitung des jeweiligen Ernteguts wird letzteres in einem Dreschspalt zwischen der Vortrommel und dem Dreschkorb bzw. zwischen der Dreschtrommel und dem Dreschkorb geführt und derart verarbeitet, dass sich Früchte des Ernteguts von verbleibenden Pflanzenresten des Ernteguts lösen. Ein Großteil der Früchte wird unmittelbar mittels des Dreschkorbs von den Pflanzenresten abgeschieden. Der Dreschkorb kann relativ zu der Dreschtrommel bewegbar sein, sodass ein zwischen der Dreschtrommel und dem Dreschkorb befindlicher Dreschspalt veränderbar ist. Die Veränderung einer Mächtigkeit des Dreschspalts wird typischerweise je nach herrschenden Randbedingungen wie beispielsweise Feuchte des Ernteguts und Erntegutdurchsatz vorgenommen, um das Dreschergebnis zu optimieren.

Die Dreschtrommel der Drescheinrichtung umfasst einen zylindrischen, um seine Mittelachse drehantreibbaren Trommelkörper sowie eine Vielzahl von Schlagleisten, die an einer äußeren Mantelfläche des Trommelkörpers angeordnet sind. Die Schlagleisten weisen jeweils eine Schlagkante auf, die parallel zu der Mittelachse des Trommelkörpers orientiert ist. Mithin erstrecken sich die Schlagleisten parallel zu der Mittelachse entlang des Trommelkörpers, wobei vorzugsweise sich die Schlagleisten über eine gesamte Länge des Trommelkörpers erstrecken. Die Schlagleisten sind dazu vorgesehen, mit dem Erntegut in Kontakt zu treten und eine Schlagenergie auf das Erntegut auszuüben, sodass die Früchte "ausgedroschen" werden, wodurch die Trennung der Früchte von den Pflanzenresten erfolgt. Damit die Schlagleisten bzw. insbesondere deren Schlagkanten in den beschriebenen Eingriff mit dem Erntegut treten können, stehen die Schlagleisten jeweils in radiale Richtung bezogen auf die Mittelachse des Trommelkörpers in eine von der Mittelachse weg gerichtete Richtung über die äußere Mantelfläche des Trommelkörpers vor. Die radial außenliegenden Schlagkanten der Schlagleisten beschreiben um die Mittelachse einen Umfangskreis, auf dem sie sich im Zuge eines Drehantriebs der Dreschtrommel bewegen. Der Umfangskreis der Schlagkanten weist bezogen auf die Mittelachse einen Schlagradius auf. Vorzugsweise sind die Schlagleisten derart ausgebildet, dass die Umfangskreise aller Schlagkanten sämtlicher Schlagleisten zumindest im Wesentlichen den gleichen Schlagradius aufweisen.

Soweit die Früchte noch nicht im Bereich der Drescheinrichtung abgeschieden werden, wird ein verbleibendes Gemisch aus Pflanzenresten und abgelösten Früchten von der Drescheinrichtung an eine unmittelbar nachgeschaltete, axiale Trenneinrichtung übergeben, mittels der die verbliebenen Früchte von den Pflanzenresten trennbar sind. Die Trenneinrichtung umfasst mindestens einen axialen Trennrotor, vorzugsweise zwei axiale Trennrotoren, die jeweils um eine Drehachse drehantreibbar gelagert sind. Typischerweise erstrecken sich die Trennrotoren parallel zueinander und sind in Längsrichtung des Mähdreschers betrachtet nebeneinander angeordnet. Um die Übergabe des Ernteguts von der Drescheinrichtung an die Trenneinrichtung zu erleichtern, umfasst die Trenneinrichtung an ihrem der Drescheinrichtung zugewandten Ende einen Einlaufkopf, in den das Erntegut ausgehend von der Drescheinrichtung übergebbar ist. Der Einlaufkopf hat die Funktion, den Erntegutstrom geordnet dem mindestens einen Trennrotor zuzuleiten.

Der mindestens eine Trennrotor weist an seinem der Drescheinrichtung zugewandten Ende mindestens einen Einlaufflügel auf, der sich bezogen auf die Drehachse des jeweiligen Trennrotors radial erstreckt und dazu vorgesehen und eingerichtet ist, in einen Einlaufbereich des Einlaufkopfs, der dem Trennrotor zugeordnet ist, übergebenes Erntegut zu erfassen und in eine Rotationsbewegung um die Drehachse des Trennrotors zu versetzen. Im Zuge des Betriebs des Trennrotors wird das Erntegut mittels des Trennrotors spiralförmig entlang dessen Drehachse bis zu einem hinteren Ende der Trenneinrichtung transportiert. Durch die mechanische Einwirkung des Trennrotors auf das Gemisch findet hierbei die gewünschte Trennung der Früchte von den Pflanzenresten statt. Die Früchte werden durch ein Dreschkorb der Trenneinrichtung nach unten auf eine Siebeinrichtung abgeschieden.

Nach der Trennung des Gemischs in Pflanzenreste und Früchte werden die Pflanzenreste schließlich an einem hinteren Ende des Mähdreschers ausgeworfen, während die Früchte in einem Korntank gesammelt werden.

Ein Mähdrescher der eingangs beschriebenen Art ist im Stand der Technik bereits bekannt. Hierzu wird auf die Offenlegungsschrift DE 42 32 450 A1 hingewiesen, die einen selbstfahrenden Mähdrescher mit einer axialen Trenneinrichtung beschreibt. Das Dokument beschäftigt sich damit, eine Drehmomentbelastung des mindestens einen Trennrotors der Trenneinrichtung zu vergleichmäßigen.

Weitere selbstfahrende Mähdrescher mit tangentialem Dreschrotor und sich anschließender axialer Trennvorrichtung sind aus den Offenlegungsschriften DE 35 37 959 A1 oder EP 1 147 701 A1 bekannt.

In der Praxis hat sich insbesondere die Übergabe des Ernteguts von der Drescheinrichtung an die Trenneinrichtung als kritisch für einen effizienten Betrieb des Mähdreschers herausgestellt. Dies liegt unter anderem darin begründet, dass der Erntegutstrom im Zuge der Übergabe von der Trenneinrichtung aufgenommen und umgelenkt werden muss, wodurch sich eine Unstetigkeit in der Strömung des Ernteguts ergibt. Hierbei kann es zu Störungen kommen, beispielsweise in Form von Verstopfungen oder sonstigen Einflüssen, die einen negativen Einfluss auf die Verarbeitung des Ernteguts haben.

Der vorliegenden Anmeldung liegt mithin die Aufgabe zugrunde, einen Mähdrescher bereitzustellen, bei dem die Übergabe des Ernteguts von der Drescheinrichtung an die Trenneinrichtung optimiert ist.

Die zugrunde liegende Aufgabe wird erfindungsgemäß mittels eines Mähdreschers mit den Merkmalen des Anspruchs 1 gelöst. Vorteilhafte Ausgestaltungen ergeben sich aus den zugehörigen Unteransprüchen.

Der erfindungsgemäße Mähdrescher ist dadurch gekennzeichnet, dass sich mindestens ein Einlaufflügel des mindestens einen Trennrotors so weit in Richtung auf die Dreschtrommel zu erstreckt, dass der Einlaufflügel bis an einen Umfangskreis von Schlagleisten der Dreschtrommel heranreicht. Dies erfolgt derart, dass der Erntegutstrom ausgehend von der Dreschtrommel unmittelbar in einen Wirkungsbereich des Einlaufflügels übergebbar ist. Insbesondere kann ein minimaler Abstand zwischen dem Umfangskreis der Schlagkanten der Schlagleisten und dem Einlaufflügel maximal 10 cm, vorzugsweise maximal 5 cm, weiter vorzugsweise maximal 3 cm, betragen.

Der erfindungsgemäße Mähdrescher hat viele Vorteile. Insbesondere wird durch die Verlängerung des Einlaufflügels in Richtung auf die Drescheinrichtung zu gegenüber dem Stand der Technik ein Wirkungsbereich des Einlaufflügels erweitert, sodass das Erntegut, das von der Drescheinrichtung an die Trenneinrichtung übergeben wird, unmittelbar bei Erreichen des Einlaufkopfs von dem Einlaufflügel des mindestens einen Trennrotors erfasst und entsprechend verarbeitet wird. Eine Strömungsstrecke des Ernteguts, der das Erntegut ungeführt, d.h. ohne aktive Beeinflussung durch die Dreschtrommel der Drescheinrichtung und/oder durch den Trennrotor der Trenneinrichtung, bewegt wird, ist auf diese Weise minimiert. Ein verbleibender Freiraum zwischen dem Umfangskreis der Schlagkanten der Schlagleisten und dem Einlaufflügel ist aus konstruktiven Gründen beizubehalten, sodass der Einlaufflügel und die Schlagleisten im Betrieb des Mähdreschers nicht kollidieren. In Versuchen hat sich gezeigt, dass durch die Erweiterung des Wirkungsbereichs des Einlaufflügels die Strömung des Ernteguts im Zuge der Übergabe an die Trenneinrichtung vergleichmäßigt wird, wodurch der Betrieb des Mähdreschers verbessert wird.

In besonders vorteilhafter Ausgestaltung des erfindungsgemäßen Mähdreschers umfasst die Trenneinrichtung mindestens zwei Trennrotoren, vorzugsweise genau zwei Trennrotoren, die in Längsrichtung des Mähdreschers betrachtet nebeneinander angeordnet sind, wobei vorzugsweise sich Drehachsen der Trennrotoren parallel zueinander erstrecken. Bei dieser Ausgestaltung umfasst der Einlaufkopf eine der Anzahl der Trennrotoren entsprechende Anzahl von Einlaufbereichen, wobei jeweils ein Einlaufbereich einem der Trennrotoren zugeordnet ist. Bei einer Ausgestaltung der Trenneinrichtung mit mehreren Trennrotoren ist der Erntegutstrom im Zuge der Übergabe von der Drescheinrichtung an die Trenneinrichtung auf die verschiedenen Einlaufbereiche des Einlaufkopfs bzw. die Trennrotoren aufzuteilen.

Erfindungsgemäß ist der mindestens eine Trennrotor an einem der Dreschtrommel zugewandten Ende in einer Lagerkonsole des Einlaufkopfs gelagert. Die Lagerkonsole ist in einem Gehäuse eingehaust, sodass das Lager des Trennrotors vor Verunreinigungen geschützt ist.

Erfidungsgemäß erstreckt sich der Einlaufflügel in axiale Richtung des Trennrotors betrachtet bis über das Gehäuse der Lagerkonsole. Bei dieser Ausgestaltung kann es besonders vorteilhaft sein, wenn das Gehäuse zumindest abschnittsweise zylindrisch ausgebildet ist, wobei sich eine Mittelachse des zylindrischen Abschnitts des Gehäuses parallel zu der Drehachse des jeweiligen Trennrotors erstreckt. Weiter vorzugsweise sind die Mittelachse des Gehäuses und die Drehachse des zugehörigen Trennrotors deckungsgleich angeordnet. Ferner ist der zylindrische Abschnitt des Gehäuses bevorzugt dem Einflussbereich des Einlaufflügels zugeordnet, sodass der Einlaufflügel im Zuge eines Drehantriebs des Trennrotors fortwährend eine äußere Mantelfläche des Gehäuses überstreichen und auf diese Weise eine Ablagerung von Erntegut auf dem Gehäuse verhindern kann. Bevorzugt sind der Einlaufflügel und das Gehäuse derart aufeinander abgestimmt, dass ein Außendurchmesser des zylindrischen Abschnitts des Gehäuses auf einen Innendurchmesser des Einlaufflügels, den dieser im Bereich des Gehäuses aufweist, abgestimmt ist. Auf diese Weise ist der Einlaufflügel dazu eingerichtet, die äußere Mantelfläche des Gehäuses in unmittelbarer Nähe zu überstreichen. Eine entsprechende Ausgestaltung ist dem nachstehenden Ausführungsbeispiel zu entnehmen.

Weiterhin kann es vorteilhaft sein, wenn sich das Gehäuse der Lagerkonsole so weit in Richtung auf die Dreschtrommel zu erstreckt, dass das Gehäuse bis an den Umfangskreis der Schlagkanten der Schlagleisten der Dreschtrommel heranreicht. Diese Ausgestaltung hat den Vorteil, dass der mindestens eine Einlaufbereich des Einlaufkopfs, der dem mindestens einen Trennrotor zugeordnet ist, näher bis an die Dreschtrommel heran geführt werden kann. Insbesondere kann die Lagerkonsole des Trennrotors, die typischerweise an einem Ende des Trennrotors angeordnet ist, infolge der an den Umfangskreis der Schlagkanten angepassten Geometrie des Gehäuses ebenfalls nah an die Dreschtrommel herangeführt werden, wodurch ebenfalls der Trennrotor nah bis zur Dreschtrommel geführt werden kann. Diese Ausgestaltung begünstigt entsprechend die Führung des mindestens einen Einlaufflügels des Trennrotors bis an den Umfangskreis der Schlagkanten der Schlagleisten. Diese Ausgestaltung folgt mithin ebenfalls dem Gedanken, den Erntegutstrom, sobald dieser die Trenneinrichtung erreicht, so zügig wie möglich mittels des Trennrotors erfassen zu können.

Vorzugsweise ist das Gehäuse an seinem der Dreschtrommel zugewandten Ende in einer an den Umfangskreis der Schlagkanten angepassten Weise nach Art eines Kreisbogenabschnitts geformt. Auf diese Weise ist das Gehäuse über seine Höhe hinweg durchgehend in einem bevorzugt konstanten Abstand zu dem Umfangskreis angeordnet. Diese Ausgestaltung hat den Vorteil, dass die Dreschtrommel auf einem möglichst großen Teil ihres Umfangs bis unmittelbar an den Einlaufkopf der Trenneinrichtung heranreicht, wodurch das Erntegut, das an die Trenneinrichtung übergeben wird, möglichst wenig Gelegenheit hat, an dem Einlaufkopf vorbei geführt zu werden und mithin nicht in der gewünschten Weise in die Trenneinrichtung einzutreten.

Unter diesem Gesichtspunkt, jedoch grundsätzlich unabhängig davon, wenngleich bevorzugt in Kombination mit der vorgenannten Ausgestaltung, kann eine solche Ausgestaltung des erfindungsgemäßen Mähdreschers vorteilhaft sein, bei der der Mähdrescher eine Abstreifkante umfasst, die parallel zu der Mittelachse des Trommelkörpers der Dreschtrommel orientiert ist. Die Abstreifkante ist bevorzugt an einem der Dreschtrommel zugewandten Ende des Einlaufkopfs ausgebildet und dazu eingerichtet, im Zuge eines Drehantriebs der Dreschtrommel um die Mittelachse das geführte Erntegut in den Einlaufkopf abzustreifen. Zu diesem Zweck ist es besonders vorteilhaft, wenn die Abstreifkante ebenfalls bis unmittelbar an den Umfangskreis der Schlagkanten der Schlagleisten der Dreschtrommel heranreicht, sodass das Erntegut, das infolge des Drehantriebs der Dreschtrommel bezogen auf die Mittelachse des Trommelkörpers in tangentialer Richtung geführt ist, von seiner tangentialen Strömung abgelenkt ("abgestriffen") und auf diese Weise in den Einlaufkopf eingeleitet wird. Hierfür ist es weiterhin besonders vorteilhaft, wenn die Abstreifkante - in einem senkrecht zu der Mittelachse des Trommelkörpers geführten Querschnitt betrachtet - auf einem Höhenniveau oberhalb der Mittelachse des Trommelkörpers angeordnet ist. Bevorzugt ist die Abstreifkante höhenmäßig in einem oberen Drittelsbereich, weiter vorzugsweise in einem oberen Viertelsbereich, der Dreschtrommel angeordnet. Auf diese Weise erstreckt sich ein Eingangsquerschnitt des Einlaufbereichs des Einlaufkopfs über einen wesentlichen Teil eines Durchmessers der Dreschtrommel, sodass das Erntegut ohne Weiteres in den Einlaufkopf eintreten kann und ein entsprechend großer Strömungsquerschnitt zur Verfügung steht. Die Bildung von Engstellen und eine dadurch bedingte Behinderung des Erntegutstroms ist entsprechend vermieden. Die Abstreifkante dient dazu, solches Pflanzenmaterial in den Einlaufkopf abzustreifen, das ansonsten in tangentialer Richtung der Dreschtrommel über den Einlaufkopf übergeworfen würde.

Besonders bevorzugt ist die Abstreifkante zumindest abschnittsweise vertikal oberhalb eines Lagerpunkts einer Lagerkonsole des Einlaufkopfs angeordnet ist, mittels der der mindestens eine Trennrotor um seine Drehachse drehantreibbar gelagert ist. Vorzugsweise ist die Abstreifkante an einem Gehäuse ausgebildet, mittels dessen die Lagerkonsole eingehaust ist.

Sofern die Trenneinrichtung in der beschriebenen Weise zwei axiale Trennrotoren umfasst und der Einlaufkopf entsprechend zwei Einlaufbereiche aufweist, von denen jeweils einer einem der Trennrotoren zugeordnet ist, ist es weiterhin besonders von Vorteil, wenn der Mähdrescher einen Gutstromteiler aufweist. Dieser kann insbesondere in Form einer vertikalen Trennwand zwischen den Einlaufbereichen des Einlaufkopfs ausgebildet sein. Der Gutstromteiler ist dazu geeignet, den von der Drescheinrichtung an die Trenneinrichtung übergebenen Erntegutstrom auf die beiden Einlaufbereiche des Einlaufkopfs aufzuteilen. Die Strömung des Ernteguts im Zuge der Übergabe an die Trenneinrichtung ist hierdurch verbessert, da der Gutstromteiler die Aufteilung des Erntegutstroms in zwei Teile, die den Trennrotoren einzeln zugeleitet werden, vornimmt.

Weiterhin kann eine solche Ausgestaltung des erfindungsgemäßen Mähdreschers besonders von Vorteil sein, bei der zumindest ein Korbsegment des Dreschkorbs bündig an ein der Drescheinrichtung zugewandtes Ende des Einlaufkopfs anschließt. Durch diese Ausgestaltung ist ein Übergang des Erntegutstroms von dem Dreschkorb zu dem Einlaufkopf hindernisfrei möglich, wodurch die Strömung des Ernteguts begünstigt wird.

Die Erfindung ist nachstehend anhand eines Ausführungsbeispiels, das in den Figuren dargestellt ist, näher erläutert. Es zeigt:
- Fig. 1:: Einen Querschnitt durch einen Mähdrescher gemäß dem Stand der Technik,
- Fig. 2:: Ein Querschnitt durch einen Arbeitsstrang eines Mähdreschers gemäß dem Stand der Technik,
- Fig. 3:: Ein Detail eines Übergabebereichs von der Drescheinrichtung zu der Trenneinrichtung eines erfindungsgemäßen Mähdreschers,
- Fig. 4:: Ein Detail eines Einlaufflügels eines Trennrotors einer Trenneinrichtung,
- Fig. 5:: Eine perspektivische Ansicht des Einlaufflügels gemäß Figur 4,
- Fig. 6:: Eine perspektivische Ansicht eines Einlaufkopfs mit zwei Einlaufbereichen,
- Fig. 7:: Ein Detail des Einlaufkopfs gemäß Figur 6 im Bereich eines Gutstromteilers.

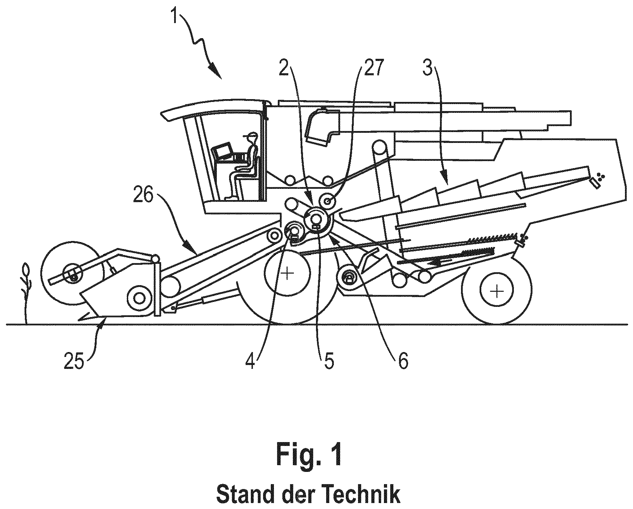

Ein nach dem Stand der Technik bekannter Mähdrescher **1** ist beispielhaft anhand von **Figur 1** veranschaulicht. Dieser umfasst ein Schneidwerk **25,** mittels dessen Pflanzen abschneidbar sind, die sodann mittels eines Schrägförderers **26** einer tangentiale Drescheinrichtung **2** zuführbar sind. Die Drescheinrichtung **2** umfasst eine Vortrommel **4,** eine Dreschtrommel **5** sowie eine Wendetrommel **27,** wobei Mittelachsen der Trommeln quer zu einer Längsrichtung des Mähdreschers **1** ausgerichtet sind. Ferner umfasst die Drescheinrichtung **2** einen Dreschkorb **6,** der zumindest die Vortrommel **4** und die Dreschtrommel **5** bereichsweise einfasst. Die Verarbeitung des Ernteguts mittels der Drescheinrichtung **2** führt dazu, dass Früchte von den Pflanzen abgelöst und die Pflanzen auf diese Weise in die Früchte und verbleibende Pflanzenreste getrennt werden. Ein Großteil der Früchte kann unmittelbar im Bereich der Drescheinrichtung **2** mittels des Dreschkorbs **6** nach unten auf einen Vorlaufboden abgeführt werden. Im Übrigen wird ein Gemisch aus Pflanzenresten und abgelösten Früchten mittels der Wendetrommel **27** an eine nachgeschaltete Trenneinrichtung **3** übergeben. Diese ist in dem in **Figur 1** gezeigten Beispiel von einem Hordenschüttler gebildet. Die Trenneinrichtung **3** hat die Aufgabe, die verbliebenen Früchte von den Pflanzenresten zu trennen, sodass diese separiert gewonnen werden können. Die Pflanzenreste werden schließlich an einem hinteren Ende des Mähdreschers **1** aus selbigem ausgeworfen. Die Früchte werden hingegen in einem Korntank gesammelt und bis zur weiteren Abfuhr gelagert.

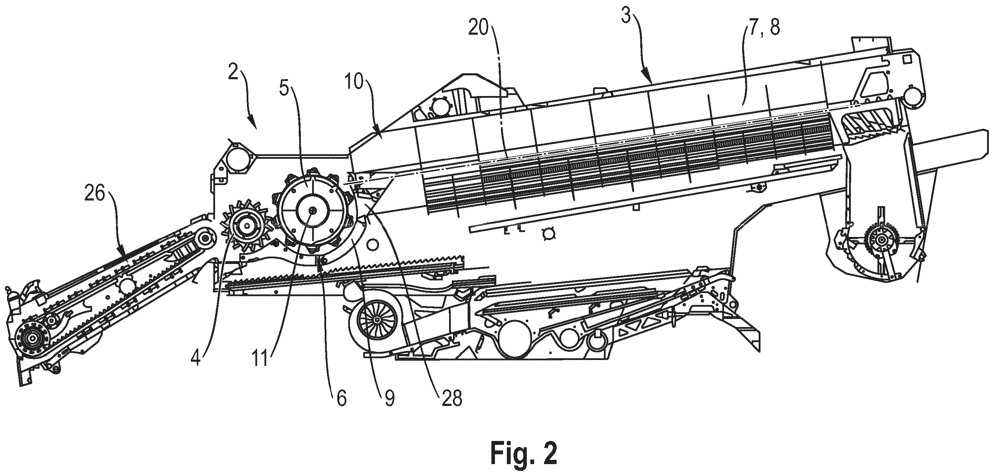

Alternativ zu einer als Hordenschüttler ausgebildeten Trenneinrichtung **3** ist ebenfalls eine axiale Trenneinrichtung **3** bekannt, die über mindestens einen Trennrotor **7, 8** verfügt. Anhand des in **Figur 2** gezeigten Beispiels aus dem Stand der Technik ergibt sich eine axiale Trenneinrichtung **3,** die über zwei Trennrotoren **7, 8** verfügt, die parallel zueinander sowie in Längsrichtung des Mähdreschers **1** betrachtet nebeneinander angeordnet sind. Die Trennrotoren **7, 8** sind jeweils um eine Drehachse **20** drehantreibbar gelagert. Die Trenneinrichtung **3** umfasst in diesem Beispiel einen der Drescheinrichtung **2** zugewandten Einlaufkopf **10,** in den das Erntegut ausgehende von der Drescheinrichtung **2** übergeben wird. Hierzu umfasst der Einlaufkopf **10** zwei Einlaufbereiche **29,** von denen jeweils einer einem der Trennrotoren **7, 8** zugeordnet ist. Die Einlaufbereiche **29** sind mittels eines Gutstromteilers **28** baulich voneinander getrennt, sodass Erntegut, das von der Drescheinrichtung **2** an die Trenneinrichtung **3** übergeben wird, mittels des Gutstromteilers **28** auf die beiden Einlaufbereiche **29** aufgeteilt wird. Der Gutstromteiler **28** ist hier von einer vertikalen Trennwand gebildet, die die beiden Einlaufbereiche **29** voneinander trennt. Eine Besonderheit der in **Figur 2** dargestellten Ausführungsform besteht darin, dass die Drescheinrichtung **2** ohne eine in **Figur 1** dargestellt Wendetrommel **27** oder eine sonstige Zuführtrommel ausgebildet ist, sodass das Erntegut unmittelbar von der Dreschtrommel **5** an die Trenneinrichtung **3** übergeben wird.

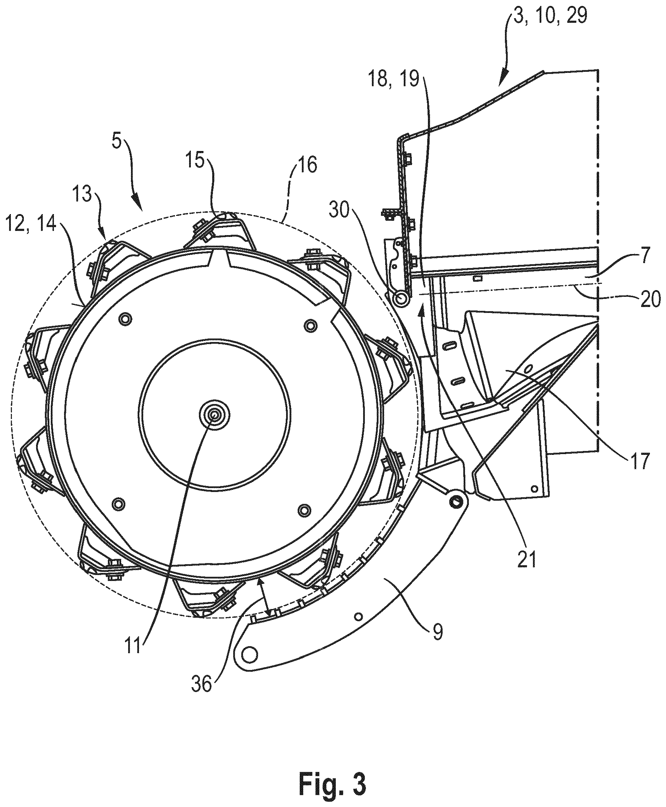

Die Dreschtrommel **5** erstreckt sich längs entlang einer Mittelachse **11** eines Trommelkörpers **12** und umfasst eine Mehrzahl von Schlagleisten **13.** Dies ergibt sich besonders gut anhand von **Figur 3**. Die Schlagleisten **13** sind an einer äußeren Mantelfläche **14** des Trommelkörpers **12** der Dreschtrommel **5** angeordnet, wobei die Schlagleisten **13** bezogen auf die Mittelachse **11** des Trommelkörpers **12** radial über die Mantelfläche **14** hinaus vorstehen. Die Schlagleisten **13** umfassen jeweils eine Schlagkante **15,** die einen radial äußeren Abschluss einer jeweiligen Schlagleiste **13** bildet. Infolge eines Drehantriebs der Dreschtrommel **5** um die Mittelachse **11** im Zuge eines Betriebs des jeweiligen Mähdreschers **1** kommen die Schlagleisten **13** mit ihren Schlagkanten **15** in schlagenden Kontakt mit dem Erntegut, wodurch die Ablösung der Früchte von den Pflanzenresten bewirkt wird. Die Schlagkanten **15,** die sich parallel zu der Mittelachse **11** erstrecken, bewegen sich im Zuge eines Drehantriebs des Trommelkörpers **12** auf einem Umfangskreis **16,** der in **Figur 3** anhand einer gestrichelten Linie veranschaulicht ist. Der Umfangskreis **16** erstreckt sich bezogen auf die Mittelachse **11** in einem Schlagradius **31** um die Mittelachse **11.** Um einen Fluss des Ernteguts von der Drescheinrichtung **2** zu der Trenneinrichtung **3** zu begünstigen, ist der Dreschkorb **6** bündig an ein der Drescheinrichtung **2** zugewandtes Ende des Einlaufkopfs **10** angeschlossen. In dem gezeigten Beispiel umfasst der Dreschkorb **6** ein hinteres Korbsegment **9,** das unmittelbar sowie bündig an den Einlaufkopf **10** angeschlossen ist.

Ein Ausführungsbeispiel des erfindungsgemäßen Mähdreschers **1** ist im Folgenden in den **Figuren 3 bis 7** veranschaulicht. Der Mähdrescher **1,** der als Ganzes nicht dargestellt ist, umfasst zwei Trennrotoren **7, 8,** die in der vorstehend beschriebenen Art und Weise nebeneinander angeordnet sind. Erfindung gemäß weisen die Trennrotoren **7, 8** jeweils einen Einlaufflügel **17** auf, die an einem der Drescheinrichtung **2** zugewandten Ende des jeweiligen Trennrotors **7, 8** ausgebildet ist. Der jeweilige Einlaufflügel **17** erstreckt sich so weit in Richtung auf die Dreschtrommel **5** zu, dass er bis an den Umfangskreis **16** der Schlagkanten **15** der Schlagleisten **13** heranreicht. Dies ergibt sich besonders gut anhand von **Figur 3**. Dort ist erkennbar, dass ein minimaler Abstand des Umfangskreises **16** von dem Einlaufflügel **17** lediglich wenige Zentimeter, hier ca. 3 cm, beträgt. Um dies zu erreichen, ist der Einlaufflügel **17** in dem gezeigten Beispiel an seinem der Dreschtrommel **5** zugewandten Ende bis über ein Gehäuse **19** einer Lagerkonsole **18** des jeweiligen Trennrotors **7, 8** geführt. Das heißt, dass der Einlaufflügel **17** eine äußere Mantelfläche **21** des Gehäuses **19** überragt, wodurch konstruktiv das Heranreichen des Einlaufflügels **17** bis an den Umfangskreis **16** umgesetzt ist.

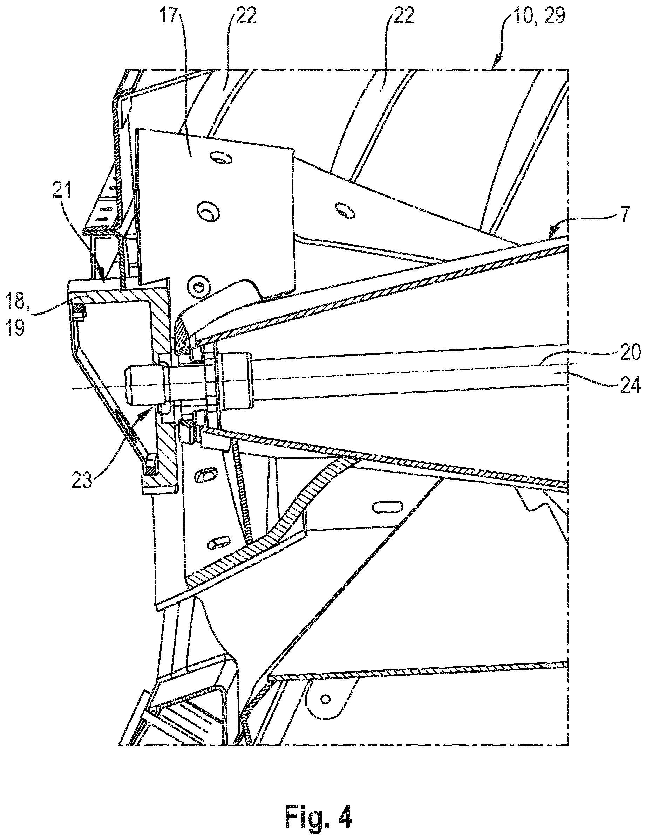

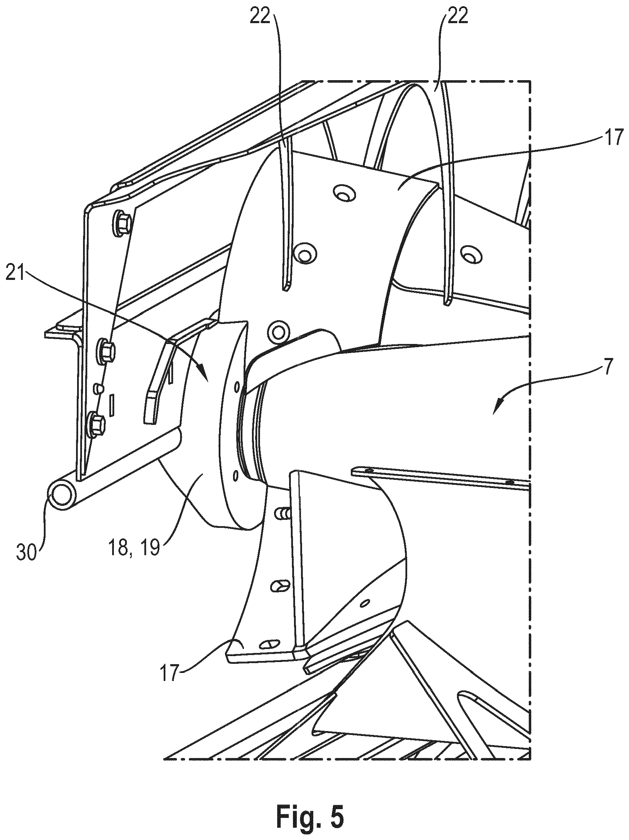

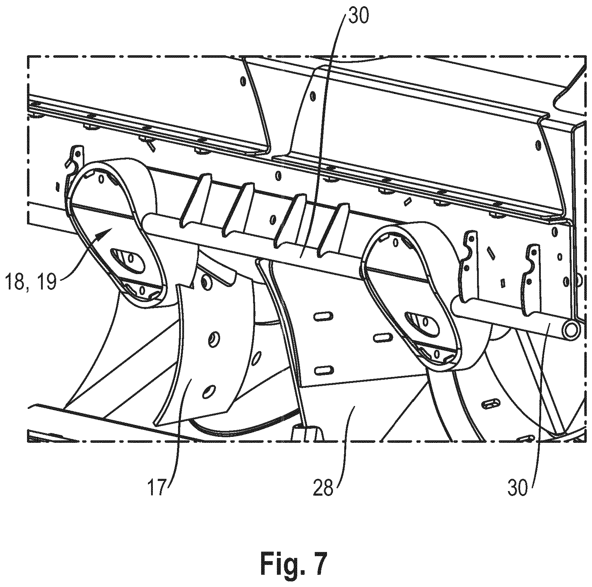

Die Lagerkonsole **18** hat die Funktion, einen Lagerpunkt **23** für eine Welle **24** des jeweiligen Trennrotors **7, 8** bereitzustellen, die die Drehachse **20** ausbildet, um die der jeweilige Trennrotor **7, 8** drehantreibbar ist. Zum Schutz des Lagerpunkts **23** vor Verschmutzung ist die Lagerkonsole **18** mit dem beschriebenen Gehäuse **19** eingehaust. Zumindest in einem dem Trennrotor **7, 8** zugewandten Endabschnitt ist das Gehäuse **19** mit einem zylindrischen Querschnitt ausgebildet, wobei der jeweilige Einlaufflügel **17** in Richtung auf die Dreschtrommel **5** zu bis über das Gehäuse **19** der jeweiligen Lagerkonsole **18** geführt ist. Hierdurch wird erreicht, dass der Einlaufflügel **17** im Zuge eines Drehantriebs des Trennrotors **7, 8** über die äußere Mantelfläche **21** des Gehäuses **19** führbar ist und hierbei etwaiges Erntegut, das sich auf dem Gehäuse **19** ablagert, von letzterem abstreift. Dies ergibt sich besonders gut anhand der **Figuren 4** **und** **5**. Weiterhin ist das Gehäuse **19** an seinem der Drescheinrichtung **2** zugewandten Ende ebenfalls bis an den Umfangskreis **16** der Schlagkanten **15** heranreichend ausgeführt, wobei das Gehäuse **19** in einer an den Umfangskreis angepassten Weise nach Art eines Kreisbogenabschnitts geformt ist. Dies ergibt sich besonders gut anhand der **Figuren 3** **und** **7**. Die Ausgestaltung hat den Vorteil, dass Erntegut, das von der Dreschtrommel **5** an die Trenneinrichtung **3** übergeben wird, weitestgehend in den Einlaufkopf **10** eintreten soll und möglichst keine Gelegenheit haben soll, an dem Einlaufkopf **10** vorbei weiterhin tangentiale Richtung der Dreschtrommel **5** geführt zu werden. Unterstützend hierfür ist an dem Gehäuse **19** eine Abstreifkante **30** ausgebildet, die nachstehend gesondert erläutert ist.

Dadurch, dass sich der Einlaufflügel **17** bis unmittelbar an die Dreschtrommel **5** heran erstreckt, kann der Erntegutstrom, der von der Dreschtrommel **5** an die Trenneinrichtung **3** übergeben wird, unmittelbar in dem jeweiligen Einlaufbereich **29** des Einlaufkopfs **10** mittels des Einlaufflügels **17** erfasst werden. Mit anderen Worten wird der Erntegutstrom ausgehend von der Dreschtrommel **5** unmittelbar in einen Wirkungsbereich des jeweiligen Einlaufflügels **17** übergeben. Hierdurch ist die Übernahme des Erntegutstroms von der Drescheinrichtung **2** optimiert, da insbesondere die Strömungsrichtung bzw. deren Veränderung, die im Zuge der Übergabe des Ernteguts von der Drescheinrichtung **2** an die Trenneinrichtung **3** prinzipbedingt stattfinden muss, unmittelbar bei Eintritt des Ernteguts in den jeweiligen Einlaufbereiche **29** beginnt.

In besonders bevorzugter Weise ist der Einlaufkopf **10** in den Einlaufbereichen **29** mit zusätzlichen Führungselementen **22** ausgestattet, die sich teilwendelförmig an einer inneren Mantelfläche des Einlaufkopfs **10** erstrecken und dazu geeignet sind, dem jeweiligen Erntegutstrom die gewünschte wendelförmige Strömungsrichtung um die Drehachse **20** des jeweiligen Trennrotors **7, 8** aufzuprägen. Diese Führungselemente **22** ergeben sich besonders gut anhand der **Figuren 4** **und** **5****.**

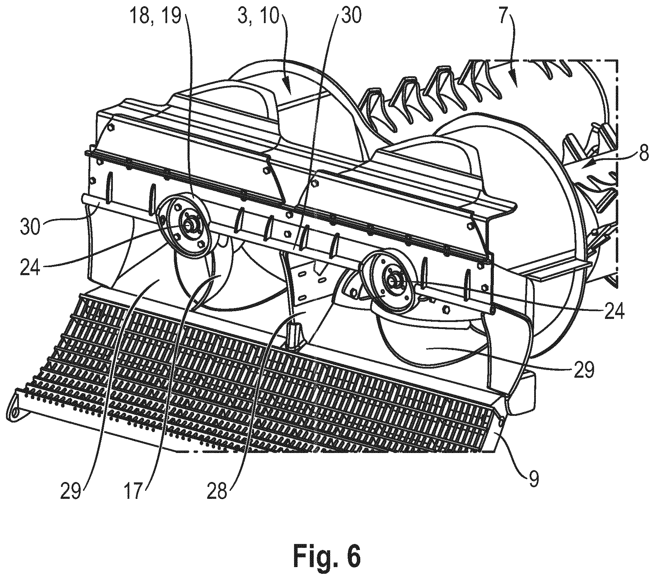

In weiterhin bevorzugter Weise umfasst der erfindungsgemäße Mähdrescher **1** in dem gezeigten Beispiel eine Abstreifkante **30,** die an einem der Drescheinrichtung **2** zugewandten Ende des Einlaufkopfs **10** der Trenneinrichtung **3** ausgebildet ist und sich parallel zu der Mittelachse **11** des Trommelkörpers **12** erstreckt. Die Abstreifkante **30** ergibt sich besonders gut anhand der **Figuren 6** **und** **7****.** Sie dient dazu, tangential bezogen auf die Mittelachse **11** des Trommelkörpers **12** geführtes Erntegut, das von der Dreschtrommel **5** bewegt wird, von der Dreschtrommel **5** abzustreifen und auf diese Weise in den Einlaufkopf **10** zu überführen. Hierbei ist in dem gezeigten Beispiel die Abstreifkante **30** in bevorzugter Weise höhenmäßig oberhalb der Mittelachse **11** des Trommelkörpers **12** angeordnet, wobei sich in dem gezeigten Beispiel die Abstreifkante **30** in einem oberen Viertelsbereich der Dreschtrommel **5** befindet. Dies ergibt sich besonders gut anhand von **Figur 3****.** Des Weiteren ist die Abstreifkante **30** in dem gezeigten Beispiel unterteilt ausgebildet, wobei die Abstreifkante **30** zwei einander gegenüberliegende Außenabschnitte sowie einen zwischen den Außenabschnitten befindlichen Mittelabschnitt umfasst, der dem Gutstromteiler **28** zwischen den Einlaufbereichen **29** zugeordnet ist. Dies ergibt sich besonders gut anhand von **Figur 7****.** Der Mittelabschnitt der Abstreifkante **30** ist höhenmäßig oberhalb des Lagerpunkts **23** des jeweiligen Trennrotors **7, 8** angeordnet, während die Außenabschnitte sich zumindest im Wesentlichen auf demselben Höhenniveau befinden wie die Drehachsen **20** der Trennrotoren **7, 8.** Die Anordnung der Außenabschnitte der Abstreifkante **30** auf einem niedrigeren Höhenniveau verringert einen unbeabsichtigten seitlichen Auswurf von Erntegut im Zuge der Übergabe von der Drescheinrichtung **2** an die Trenneinrichtung **3.** Dies ist in dem Mittelabschnitt der Abstreifkante **30** nicht erforderlich, sodass dieser zwecks Vergrößerung eines gesamten Eintrittsquerschnitts des Einlaufkopfs **10** und einer damit verbundenen Verbesserung des Eintritts des Ernteguts in den Einlaufkopf **10** höher angeordnet ist als die Außenabschnitte der Abstreifkante **30.** Das Abstreifen von Erntegut von der Dreschtrommel **5** vermeidet ein Überwerfen des Ernteguts über die Dreschtrommel **5.** Das Risiko einer Blockade oder einer sonstigen Störung der Strömung des Ernteguts ist hierdurch minimiert.

### Bezugszeichenliste

- 1: Mähdrescher
- 2: Drescheinrichtung
- 3: Trenneinrichtung
- 4: Vortrommel
- 5: Dreschtrommel
- 6: Dreschkorb
- 7: Trennrotor
- 8: Trennrotor
- 9: Korbsegment
- 10: Einlaufkopf
- 11: Mittelachse
- 12: Trommelkörper
- 13: Schlagleiste
- 14: Mantelfläche
- 15: Schlagkante
- 16: Umfangskreis
- 17: Einlaufflügel
- 18: Lagerkonsole
- 19: Gehäuse
- 20: Drehachse
- 21: Mantelfläche
- 22: Führungselement
- 23: Lagerpunkt
- 24: Welle
- 25: Schneidwerk
- 26: Schrägförderer
- 27: Wendetrommel
- 28: Gutstromteiler
- 29: Einlaufbereich
- 30: Abstreifkante

## Patentansprüche

1. Selbstfahrender Mähdrescher (1), umfassend
- eine tangentiale Drescheinrichtung (2) sowie
- eine axiale Trenneinrichtung (3),
wobei die Drescheinrichtung (2) eine tangentiale Vortrommel (4), eine in Strömungsrichtung eines Erntegutstroms der Vortrommel (4) nachgeschaltete tangentiale Dreschtrommel (5) sowie einen sowohl die Vortrommel (4) als auch die Dreschtrommel (5) zumindest bereichsweise ummantelnden Dreschkorb (6) aufweist,
wobei die Dreschtrommel (5) einen zylindrischen, um seine Mittelachse (11) drehantreibbaren Trommelkörper (12) sowie eine Vielzahl von Schlagleisten (13) aufweist, die an einer äußeren Mantelfläche (14) des Trommelkörpers (12) angeordnet sind,
wobei die Schlagleisten (13) jeweils eine Schlagkante (15) aufweisen, die bei einem Drehantrieb der Dreschtrommel (5) auf einem Umfangskreis (16) um die Mittelachse (11) des Trommelkörpers (12) umlaufen,
wobei die Trenneinrichtung (3) in Strömungsrichtung des Erntegutstroms betrachtet der Drescheinrichtung (2) unmittelbar nachgeschaltet ist mindestens einen axialen Trennrotor (7, 8) umfasst,
wobei die Trenneinrichtung (3) an einem der Drescheinrichtung (2) zugewandten Ende einen Einlaufkopf (10) aufweist, in den Erntegut von der Drescheinrichtung (2) aus kommend übergebbar und geordnet dem Trennrotor (7, 8) zuleitbar ist,
wobei der Trennrotor (7, 8) mindestens einen Einlaufflügel (17) aufweist, der an einem der Dreschtrommel (5) zugewandten Ende des Einlaufkopfs (10) angeordnet ist,
wobei sich mindestens ein Einlaufflügel (17) des mindestens einen Trennrotors (7, 8) so weit in Richtung auf die Dreschtrommel (5) zu erstreckt, dass der Einlaufflügel (17) bis an den Umfangskreis (16) der Schlagkanten (15) der Dreschtrommel (5) heranreicht, sodass der Erntegutstrom ausgehend von der Dreschtrommel (5) unmittelbar in einen Wirkungsbereich des Einlaufflügels (17) übergebbar ist, wobei der mindestens eine Trennrotor (7, 8) an einem der Dreschtrommel (5) zugewandten Ende in einer Lagerkonsole (18) des Einlaufkopfs (10) gelagert ist, wobei die Lagerkonsole (18) mittels eines Gehäuses (19) eingehaust ist, wobei sich der Einlaufflügel (17) in axiale Richtung des mindestens einen Trennrotors (7, 8) betrachtet bis über das Gehäuse (19) der zugehörigen Lagerkonsole (18) erstreckt.

2. Mähdrescher (1) nach Anspruch 1, **dadurch gekennzeichnet, dass** das Gehäuse (19) der Lagerkonsole (18) zumindest abschnittsweise einen zylindrischen Querschnitt aufweist, wobei der Einlaufflügel (17) im Zuge eines bestimmungsgemäßen Drehantriebs des mindestens einen Trennrotors (7, 8) um dessen Drehachse (20) mit einer äußeren Mantelfläche (21) des Gehäuses (19) abstreifend zusammenwirkt.

3. Mähdrescher (1) nach einem der Ansprüche 1 bis 2, **dadurch gekennzeichnet, dass** sich das Gehäuse (19) der Lagerkonsole (18) so weit in Richtung auf die Dreschtrommel (5) zu erstreckt, dass es bis an den Umfangskreis (16) der Schlagkanten (15) der Schlagleisten (13) der Dreschtrommel (5) heranreicht, wobei vorzugsweise das Gehäuse (19) an seinem der Dreschtrommel (5) zugewandten Ende in einer an den Umfangskreis (16) angepassten Weise nach Art eines Kreisbogenabschnitts geformt ist.

4. Mähdrescher (1) nach einem der vorhergehenden Ansprüche, **gekennzeichnet, durch** eine parallel zu der Mittelachse (11) des Trommelkörpers (12) der Dreschtrommel (5) orientierte Abstreifkante (30), die an einem der Dreschtrommel (5) zugewandten Ende des Einlaufkopfs (10) angeordnet und dazu eingerichtet ist, im Zuge eines Drehantriebs der Dreschtrommel (5) um die Mittelachse (11) mittels der Dreschtrommel (5) geführtes Erntegut in den Einlaufkopf (10) abzustreifen.

5. Mähdrescher (1) nach Anspruch 4, **dadurch gekennzeichnet, dass** die Abstreifkante (30) vertikal oberhalb eines Lagerpunkts (23) einer Lagerkonsole (18) des mindestens einen Trennrotors (7, 8) angeordnet ist, wobei vorzugsweise die Abstreifkante (30) an einem Gehäuse (19) ausgebildet ist, mittels dessen die Lagerkonsole (18) eingehaust ist.

6. Mähdrescher (1) nach einem der Ansprüche 4 bis 5, **dadurch gekennzeichnet, dass** die Abstreifkante (30) - in einem senkrecht zu der Mittelachse (11) des Trommelkörpers (12) der Dreschtrommel (5) geführten Querschnitt betrachtet - auf einem Höhenniveau oberhalb der Mittelachse (11), vorzugsweise in einem oberen Drittelsbereich, weiter vorzugsweise in einem oberen Viertelsbereich, der Dreschtrommel (5) angeordnet ist.

7. Mähdrescher (1) nach einem der vorhergehenden Ansprüche, **dadurch gekennzeichnet, dass** die Trenneinrichtung (3) zwei axiale Trennrotoren (7, 8) umfasst, wobei der Einlaufkopf (10) zwei Einlaufbereiche (29) aufweist, von denen jeweils einer einem der Trennrotoren (7, 8) zugeordnet ist, wobei der Mähdrescher (1) einen Gutstromteiler (28) aufweist, mittels dessen der von der Drescheinrichtung (2) an die Trenneinrichtung (3) übergebene Erntegutstrom auf die beiden Einlaufbereiche (29) aufteilbar ist.

8. Mähdrescher (1) nach einem der vorhergehenden Ansprüche, **dadurch gekennzeichnet, dass** zumindest ein Korbsegment (9) des Dreschkorbs (6) bündig an ein der Drescheinrichtung (2) zugewandtes Ende des Einlaufkopfs (10) anschließt.

## Claims

1. A self-propelled combine harvester (1), comprising
- a tangential threshing device (2), as well as
- an axial separating device (3),
wherein the threshing device (2) has a tangential front drum (4), a tangential threshing drum (5) disposed downstream of the front drum (4) in the direction of flow of a flow of harvested material, as well as a threshing concave (6) covering both the front drum (4) and also the threshing drum (5) at least in regions,
wherein the threshing drum (5) has a cylindrical drum body (12) which can be driven in rotation about its central axis (11) as well as a plurality of beater bars (13) which are disposed on an outer curved surface (14) of the drum body (12),
wherein the beater bars (13) respectively have a beater edge (15), the beater edges revolving on a circumferential circle (16) about the central axis (11) of the drum body (12) when the threshing drum (5) is driven in rotation,
wherein, considered in the direction of flow of the flow of harvested material, the separating device (3) is disposed directly downstream of the threshing device (2) and comprises at least one axial separating rotor (7, 8),
wherein, at an end facing the threshing device (2), the separating device (3) has an inflow head (10) into which harvested material coming out of the threshing device (2) can be transferred and can be fed to the separating rotor (7, 8) in an ordered manner,
wherein the separating rotor (7, 8) has at least one inflow vane (17) which is disposed at an end of the inflow head (10) facing the threshing drum (5),
wherein at least one inflow vane (17) of the at least one separating rotor (7, 8) extends so far in the direction towards the threshing drum (5) that the inflow vane (17) reaches to the circumferential circle (16) of the beater edges (15) of the threshing drum (5), so that the flow of harvested material coming from the threshing drum (5) can be transferred directly into an operational region of the inflow vane (17), wherein, at an end facing the threshing drum (5), the at least one separating rotor (7, 8) is mounted in a bearing bracket (18) of the inflow head (10) wherein the bearing bracket (18) is enclosed by means of a housing (19), wherein, considered in the axial direction of the at least one separating rotor (7, 8), the inflow vane (17) extends over the housing (19) of the associated bearing bracket (18).

2. The combine harvester (1) according to claim 1, **characterized in that** the housing (19) of the bearing bracket (18) has a cylindrical cross section at least in sections, wherein, during the course of an intended rotational operation of the at least one separating rotor (7, 8) about its axis of rotation (20), the inflow vane (17) cooperates with an outer curved surface (21) of the housing (19) for the purposes of stripping.

3. The combine harvester (1) according to one of claims 1 to 2, **characterized in that** the housing (19) of the bearing bracket (18) extends so far in the direction towards the threshing drum (5) that it reaches to the circumferential circle (16) of the beater edges (15) of the beater bars (13) of the threshing drum (5), wherein preferably, at its end facing the threshing drum (5), the housing (19) is shaped in a manner which is adapted to the circumferential circle (16), in the nature of a section of a circular arc.

4. The combine harvester (1) according to one of the preceding claims, **characterized by** a stripper edge (30) which is orientated parallel to the central axis (11) of the drum body (12) of the threshing drum (5), the stripper edge being disposed at an end of the inflow head (10) facing the threshing drum (5) and being configured, during the course of a rotational operation of the threshing drum (5) about the central axis (11), to strip harvested material conducted by the threshing drum (5) into the inflow head (10).

5. The combine harvester (1) according to claim 4, **characterized in that** the stripper edge (30) is disposed vertically above a bearing point (23) of a bearing bracket (18) of the at least one separating rotor (7, 8), wherein preferably, the stripper edge (30) is constructed on a housing (19) by means of which the bearing bracket (18) is enclosed.

6. The combine harvester (1) according to one of claims 4 to 5, **characterized in that** - considered in a cross section taken perpendicular to the central axis (11) of the drum body (12) of the threshing drum (5) - the stripper edge (30) is disposed at a height above the central axis (11), preferably in an upper third, more preferably in an upper quarter of the threshing drum (5).

7. The combine harvester (1) according to one of the preceding claims, **characterized in that** the separating device (3) comprises two axial separating rotors (7, 8), wherein the inflow head (10) has two inflow zones (29), each one of which being associated with one of the separating rotors (7, 8), wherein the combine harvester (1) has a material flow divider (28) by means of which the flow of harvested material transferred from the threshing device (2) to the separating device (3) can be divided onto the two inflow zones (29).

8. The combine harvester (1) according to one of the preceding claims, **characterized in that** at least one concave segment (9) of the threshing concave (6) is flush with an end of the inflow head (10) facing the threshing device (2).

## Revendications

1. Moissonneuse-batteuse (1) automotrice, comprenant :
- un dispositif de battage (2) tangentiel, ainsi que
- un dispositif de séparation (3) axial,
dans laquelle le dispositif de battage (2) présente un premier tambour (4) tangentiel, un batteur (5) tangentiel placé en aval du premier tambour (4) dans le sens d'écoulement d'un flux de récolte, ainsi qu'un contre-batteur (6) enveloppant au moins en partie aussi bien le premier tambour (4) que le batteur (5),
dans laquelle le batteur (5) présente un corps de tambour (12) cylindrique pouvant être entraîné en rotation autour de son axe central (11), ainsi qu'une pluralité de battes (13) qui sont disposées sur une surface enveloppe (14) extérieure du corps de tambour (12),
dans laquelle les battes (13) présentent chacune une arête de battage (15) qui tourne sur un cercle périphérique (16) autour de l'axe central (11) du corps de tambour (12) lorsque le batteur (5) est entraîné en rotation,
dans laquelle le dispositif de séparation (3) est placé directement à la suite du dispositif de battage (2), vu dans le sens d'écoulement du flux de récolte, et comporte au moins un rotor de séparation (7, 8) axial,
dans laquelle le dispositif de séparation (3) présente, à une extrémité tournée vers le dispositif de battage (2), une tête d'entrée (10) dans laquelle des produits récoltés en provenance du dispositif de battage (2) peuvent être transférés et acheminés de manière ordonnée au rotor de séparation (7, 8),
dans laquelle le rotor de séparation (7, 8) présente au moins une aile d'entrée (17) qui est disposée sur une extrémité de la tête d'entrée (10) tournée vers le batteur (5),
dans laquelle au moins une aile d'entrée (17) du rotor de séparation (7, 8), au nombre d'au moins un, s'étend en direction du batteur (5) sur une distance telle que l'aile d'entrée (17) atteigne le cercle périphérique (16) des battes (13) du batteur (5), de sorte que, partant du batteur (5), le flux de récolte peut être transféré directement dans une zone d'action de l'aile d'entrée (17), le rotor de séparation (7, 8), au nombre d'au moins un, étant monté dans une console de support (18) de la tête d'entrée (10), à une extrémité tournée vers le batteur (5), la console de support (18) étant enveloppée à l'aide d'un boîtier (19), l'aile d'entrée (17) s'étendant jusqu'au-dessus du boîtier (19) de la console de support (18) associée, vu dans la direction axiale du rotor de séparation (7, 8), au nombre d'au moins un.

2. Moissonneuse-batteuse (1) selon la revendication 1, **caractérisée en ce que** le boîtier (19) de la console de support (18) présente au moins par portions une section cylindrique, l'aile d'entrée (17) coopérant avec un effet de raclage avec une surface enveloppe (21) extérieure du boîtier (19), dans le cadre d'un entraînement en rotation conforme à l'utilisation prévue du rotor de séparation (7, 8), au nombre d'au moins un, autour de l'axe de rotation (20) de celui-ci.

3. Moissonneuse-batteuse (1) selon une des revendications 1 à 2, **caractérisée en ce que** le boîtier (19) de la console de support (18) s'étend en direction du batteur (5) sur une distance telle qu'il atteigne le cercle périphérique (16) des battes (13) du batteur (5), le boîtier (19) étant de préférence façonné, à son extrémité tournée vers le batteur (5), à la manière d'une partie en arc de cercle, d'une façon qui est adaptée au cercle périphérique (16).

4. Moissonneuse-batteuse (1) selon une des revendications précédentes, **caractérisée en ce qu'**elle présente une arête de raclage (30) qui est orientée parallèlement à l'axe central (11) du corps de tambour (12) du batteur (5), est disposée à une extrémité de la tête d'entrée (10) tournée vers le batteur (5) et est agencée pour racler dans la tête d'entrée (10) des produits récoltés guidés à l'aide du batteur (5), dans le cadre d'un entraînement en rotation du batteur (5) autour de l'axe central (11).

5. Moissonneuse-batteuse (1) selon la revendication 4, **caractérisée en ce que** l'arête de raclage (30) est disposée verticalement au-dessus d'un point de support (23) d'une console de support (18) du rotor de séparation (7, 8), au nombre d'au moins un, l'arête de raclage (30) étant réalisée de préférence sur un boîtier (19) par lequel la console de support (18) est entourée.

6. Moissonneuse-batteuse (1) selon une des revendications 4 à 5, **caractérisée en ce que** l'arête de raclage (30) - vue dans une coupe transversale perpendiculaire à l'axe central (11) du corps de tambour (12) du batteur (5) - est disposée à un niveau de hauteur au-dessus de l'axe central (11), de préférence dans un tiers supérieur, et notamment de préférence dans un quart supérieur du batteur (5).

7. Moissonneuse-batteuse (1) selon une des revendications précédentes, **caractérisée en ce que** le dispositif de séparation (3) comprend deux rotors de séparation (7, 8) axiaux, la tête d'entrée (10) présentant deux zones d'entrée (29) qui sont chacune associées à l'un des rotors de séparation (7, 8), la moissonneuse-batteuse (1) présentant un diviseur de flux de produit (28) qui permet de répartir sur les deux zones d'entrée (29) le flux de récolte transféré du dispositif de battage (2) au dispositif de séparation (3).

8. Moissonneuse-batteuse (1) selon une des revendications précédentes, **caractérisée en ce qu'**au moins un segment (9) du contre-batteur (6) se raccorde de manière jointive à une extrémité de la tête d'entrée (10) tournée vers le dispositif de battage (2).
